# EUROPÄISCHE PATENTSCHRIFT

(11) **EP 1 103 710 B1**
(45) Veröffentlichungstag und Bekanntmachung des Hinweises auf die Patenterteilung: **12.04.2006**
(21) Anmeldenummer: 00124576.0
(22) Anmeldetag: 10.11.2000
(51) Int. Cl.: F02D 41/22, F02D 41/30, F02D 41/20, F02D 41/12

(54) **Verfahren und Vorrichtung zur Ansteuerung eines Verbrauchers**
Method and apparatus for controlling a load
Méthode et dispositif pour contrôler une charge

(30) Priorität: 27.11.1999 DE 19957181
(43) Veröffentlichungstag der Anmeldung: 30.05.2001
(73) Patentinhaber: ROBERT BOSCH GMBH, 70442 Stuttgart (DE)
(72) Erfinder: Biester, Juergen, 71034 Boeblingen (DE); Schulz, Udo, 71665 Vaihingen / Enz (DE)

(56) Entgegenhaltungen:
- WO-A-95/07409
- DE-A- 19 701 471
- US-A- 4 486 703

## Beschreibung

### Stand der Technik

Die Erfindung betrifft ein Verfahren und eine Vorrichtung zur Ansteuerung wenigstens eines Verbrauchers gemäß den Oberbegriffen der unabhängigen Ansprüche.

Ein Verfahren und eine Vorrichtung zur Ansteuerung eines elektromagnetischen Verbrauchers ist aus der DE-OS 197 01 471 bekannt. Dort wird ein Verfahren und eine Vorrichtung zur Steuerung von Magnetventilen zur Steuerung der Einspritzung von Kraftstoff in eine Brennkraftmaschine beschrieben. Insbesondere wird dort ein so genanntes Magnetventil gesteuertes Common-Rail-System beschrieben. Üblicherweise wird zum beschleunigten Einschalten der Injektoren ein so genannter Booster-Kondensator verwendet, der auf eine gegenüber der Versorgungsspannung erhöhte Spannung aufgeladen wird. Das Laden des Kondensators erfolgt üblicherweise in einer so genannten Schnell-Löschphase während der Ansteuerung und/oder in einer so genannten Recharge-Phase zwischen zwei Ansteuerungen. In längeren Schubphasen des Motors bzw. in Phasen, in denen keine Einspritzung erfolgt, entlädt sich der Kondensator. Dies hat zur Folge, dass bei der ersten Einspritzung der Schaltvorgang des Ventils nicht so schnell wie vorgesehen erfolgt. Zur Vermeidung dieses Nachteils ist beim Stand der Technik vorgesehen, dass nach einer längeren Pause von Einspritzungen vor der nächsten Einspritzung der Kondensator geladen wird.

Ferner ist aus der Aus dem Dokument WO 95/07409 ist ein Verfahren und eine Vorrichtung zur Ansteuerung wenigstens eines Verbrauchers bekannt. Mit wenigstens einem Schaltmittel wird der Stromfluss durch den Verbraucher abhängig von einem Ansteuersignal gesteuert. Bei einem erkannten Fehler wird die Brennkraftmaschine abgeschaltet. Zur Prüfung ob ein Fehler vorliegt, wird die Spannung an einem Kondensator ausgewertet. Weicht dieses Signal von erwarteten Werten ab, so wird die Brennkraftmaschine abgeschaltet.

Aus der US 4,658,202 A ist eine Überwachungseinrichtung für einer Endstufe, die von einer Steuerung angesteuert wird, bekannt. Die Überwachungseinrichtung überprüft die Endstufe auf Vorliegen eines Kurzschlusses. Die Überwachung, die insbesondere durch einen Vergleicher gebildet wird, leitet bei Erkennen eines Kurzschlusses ein Signal an die Steuerung weiter.

Beim Nachladen in der Recharge-Phase wird der Verbraucher kurzzeitig derart bestromt, dass der Verbraucher normalerweise nicht anspricht. Die beim Unterbrechen der Bestromung induzierte Spannung dient zum Laden des Kondensators. Bei ungünstigen Bedingungen kann dabei der Fall eintreten, dass der Verbraucher anspricht und eine kleine Kraftstoffmenge zugemessen wird.

Bei solchen Einrichtungen muss sicher verhindert werden, dass die Injektoren in Betriebszuständen, in denen keine Einspritzung vorgesehen ist, bzw. wenn die Brennkraftmaschine abgeschaltet werden soll, kein Kraftstoff zugemessen wird.

### Vorteile der Erfindung

Mit der erfindungsgemäßen Vorgehensweise kann eine erhöhte Sicherheit der Steuerung der Kraftstoffeinspritzung erzielt werden. Besonders vorteilhaft ist, dass die Sicherheitseinrichtung zusätzlich überprüft werden kann.

### Zeichnung

Die Erfindung wird nachstehend anhand der in der Zeichnung dargestellten Ausführungsformen näher erläutert. Es zeigen Figur 1 eine Schaltungsanordnung für verschiedene Verbraucher, Figur 2 ein Blockdiagramm der Steuereinheit und Figur 3 ein Flussdiagramm der erfindungsgemäßen Vorgehensweise.

### Beschreibung der Ausführungsbeispiele

Die erfindungsgemäße Einrichtung wird bevorzugt bei Brennkraftmaschinen, insbesondere bei selbstzündenden Brennkraftmaschinen, eingesetzt. Dort dienen elektromagnetische Ventile zur Steuerung der Kraftstoffzumessung. Diese elektromagnetischen Ventile werden im folgenden als Verbraucher bezeichnet. Die Erfindung ist nicht auf diese Anwendung beschränkt, sie kann überall dort eingesetzt werden, wo elektromagnetische Verbraucher benötigt werden.

Bei der Anwendung bei Brennkraftmaschinen, insbesondere bei selbstzündenden Brennkraftmaschinen legen der Öffnungs- und Schließzeitpunkt des Magnetventils den Einspritzbeginn bzw. das Einspritzende des Kraftstoffs in den Zylinder fest.

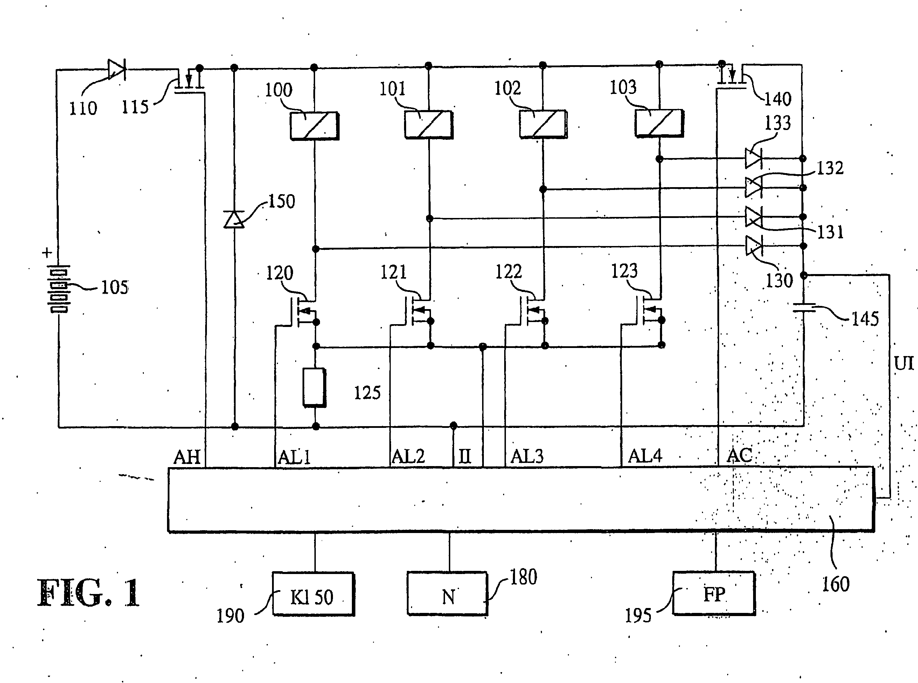

In Figur 1 sind die wesentlichsten Elemente der erfindungsgemäßen Einrichtung dargestellt. Bei der dargestellten Ausführungsform handelt es sich um eine Vierzylinderbrennkraftmaschine. Hierbei ist jedem Verbraucher ein Einspritzventil und jedem Einspritzventil ein Zylinder der Brennkraftmaschine zugeordnet. Bei höheren Zylinderzahlen der Brennkraftmaschine sind entsprechend mehr Ventile, Schaltmittel und Dioden vorzusehen.

Mit 100, 101, 102 und 103 sind vier Verbraucher bezeichnet. Jeweils ein erster Anschluß der Verbraucher 100 bis 103 steht über ein Schaltmittel 115 und eine Diode 110 mit einer Spannungsversorgung 105 in Verbindung.

Die Diode 110 ist so angeordnet, daß sie mit ihrer Anode mit dem Pluspol und mit ihrer Kathode mit dem Schaltmittel 115 in Verbindung steht. Bei dem Schaltmittel 115 handelt es sich vorzugsweise um einen Feldeffekttransistor.

Jeweils der zweite Anschluß der Verbraucher 100 bis 103 steht über jeweils ein zweites Schaltmittel 120, 121, 122 und 123 mit einem Widerstandsmittel 125 in Verbindung. Bei dem Schaltmittel 120 bis 123 handelt es sich ebenfalls vorzugsweise um Feldeffekttransistoren. Die Schaltmittel 120 bis 123 werden als Low-Side-Schalter und das Schaltmittel 115 als High-Side-Schalter bezeichnet. Der zweite Anschluß des Widerstandsmittels 125 steht mit dem zweiten Anschluß der Spannungsversorgung in Verbindung.

Jedem Verbraucher 100 bis 103 ist eine Diode 130, 131, 132 und 133 zugeordnet. Der Anodenanschluß der Dioden steht jeweils mit dem Verbindungspunkt zwischen Verbraucher und Low-Side-Schalter in Kontakt. Der Kathodenanschluß steht mit einem Kondensator 145 sowie einem weiteren Schaltmittel 140 in Verbindung. Der zweite Anschluß des Schaltmittels 140 steht mit den ersten Anschlüssen der Verbraucher 100 bis 103 in Kontakt. Bei dem Schaltmittel 140 handelt es sich ebenfalls vorzugsweise um einen Feldeffekttransistor. Dieses Schaltmittel 140 wird auch als Booster-Schalter bezeichnet. Der zweite Anschluß des Kondensators 145 steht ebenfalls mit dem zweiten Anschluß der Versorgungsspannung 105 in Verbindung.

Eine Steuereinheit 160 beaufschlagt den High-Side-Schalter 115 mit einem Ansteuersignal AH. Das Schaltmittel 120 wird von der Steuereinheit 160 mit einem Ansteuersignal AL1, das Schaltmittel 121 mit einem Ansteuersignal AL2, das Schaltmittel 122 mit einem Ansteuersignal AL3, das Schaltmittel 123 mit einem Ansteuersignal AL4 und das Schaltmittel 140 mit einem Ansteuersignal AC beaufschlagt.

Zwischen dem zweiten Anschluß der Spannungsversorgung 105 und dem Verbindungspunkt zwischen dem Schaltmittel 115 und den ersten Anschlüssen der Verbraucher 100 bis 103 ist eine Diode 150 geschaltet. Hierbei ist die Anode der Diode mit dem zweiten Anschluß der Spannungsversorgung 105 verbunden.

Die Steuerung verarbeitet unter anderem das Signal N eines Drehzahlgebers 180, eines die Fahrpedalstellung FP angebenden Gebers 195 und die an einer Klemme 50 anliegende Spannung 190. An der sogenannten Klemme 50 liegt eine Spannung an, wenn der Starter betätigt wird. Eine Spannung an Klemme 50 zeigt eine Betätigung des Starters bzw. Ein unmittelbar bevorstehender Start der Brennkraftmaschine an.

Durch Auswerten des Spannungsabfalls an dem Widerstand 125 durch die Steuerung 160 wird von dieser der durch den Verbraucher fließende Strom ermittelt.

Mit der dargestellten Anordnung ist eine Strommessung über den Strommeßwiderstand 125 nur möglich, wenn eines der Schaltmittel 120 bis 123 geschlossen ist. Um den Strom auch bei geöffneten Low-Side-Schaltern erfassen zu können, kann der Strommeßwiderstand auch an anderer Stelle angeordnet werden. Beispielsweise kann der zweite Anschluß des Kondensators 145 mit dem Verbindungspunkt zwischen dem Strommeßmittel 125 und dem Schaltmittel 120 bis 123 verbunden werden. In diesem Fall ist auch eine Strommessung bei gesperrtem Low-Side-Schalter möglich. Ferner kann das Strommeßmittel zwischen der Spannungsversorgung und dem High-Side-Schalter bzw. zwischen dem High-Side-Schalter und den Verbrauchern angeordnet sein.

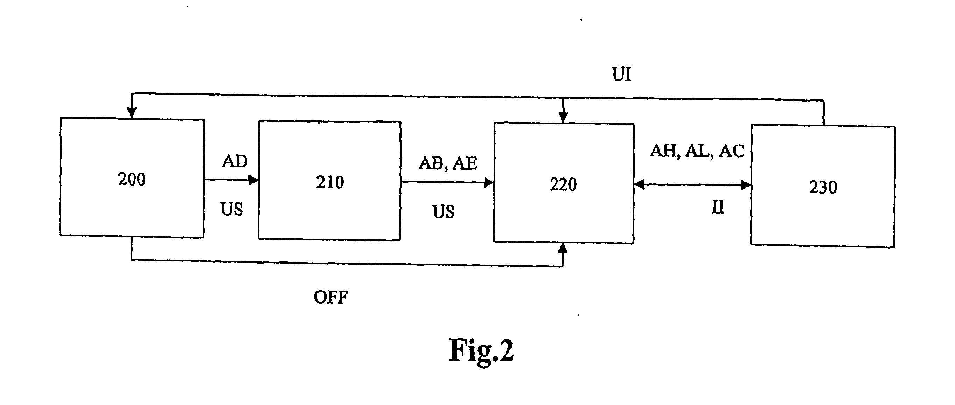

In der Figur 2 ist insbesondere die Steuereinheit 160 detaillierter dargestellt. Die Steuereinheit 160 wird im wesentlichen gebildet durch einen Rechner 200, eine Umsetzung 210 sowie einen Steuerbaustein 220. Der Rechner 200 beaufschlagt die Umsetzung 210 mit einem Ansteuersignal AD und einem Signal US. Das Signal AD bestimmt im wesentlichen die Ansteuerdauer, mit denen die Verbraucher angesteuert werden sollen. Die Umsetzung 210 ist vorzugsweise als sogenanntes Gate Array ausgebildet und bestimmt ausgehend von der Ansteuerdauer AD und der Sollspannung US, die an dem Booster-Kondensator 145 anliegen soll, Signale, die den Ansteuerbeginn, das Ansteuerende AE und die Sollspannung US charakterisieren. Der Steuerbaustein 220 setzt diese Signale AB, AE und US in Signale AH, AL1 bis AL4 bzw. AC um, mit diesen Signalen werden dann die verschiedenen Schaltmittel, die in der Endstufe 203 enthalten sind, umgesetzt.

In Figur 1 ist eine mögliche Ausführungsform der Endstufe 230 detaillierter dargestellt. Die erfindungsgemäße Vorgehensweise ist dabei nicht auf diese Ausführungsform der Endstufe beschränkt, sie kann auch bei anderen Endstufen eingesetzt werden. Insbesondere sind auch Endstufen mit weniger oder mit mehr Schaltmitteln möglich.

Der Rechner 200, die Umsetzung 210 und der Steuerbaustein 220 bilden im wesentlichen die Steuereinheit 160 der Figur 1. Die Schaltmittel und die verschiedenen Dioden sowie der Kondensator 145 bilden die Endstufe 230. Die Endstufe 230 übermittelt Signale II, die den Strom durch den Verbraucher charakterisieren sowie die Spannung UI, die an dem Booster-Kondensator 145 anliegt, an den Steuerbaustein zurück.

Üblicherweise ist der Steuerbaustein 220 derart ausgebildet, daß das Nachladen des Booster-Kondensators durchgeführt wird, wenn die Spannung UI unter einen Schwellenwert S1 abfällt. Alternativ oder ergänzend kann vorgesehen sein, daß die Spannung UI auch zum Rechner 200 zurückgeleitet wird. Der Rechner 200 aktiviert durch die Vorgabe eines bestimmten Werts für die Ansteuerdauer das Nachladen. Vorzugsweise wird beim Nachladen für die Ansteuerdauer AD der Wert 0 gewählt.

Beim Nachladen des Booster-Kondensators 145 wird üblicherweise so vorgegangen, daß der Strom II, der durch den Verbraucher fließt, auf einen solchen Wert eingeregelt wird, bei dem der Verbraucher nicht reagiert. Unter ungünstigen Umständen kann der Fall eintreten, daß trotz des niederen Stroms ein Verbraucher anspricht. Dies ist unerwünscht und soll durch das erfindungsgemäße Verfahren sicher verhindert werden. Erfindungsgemäß ist daher vorgesehen, daß der Rechner 200 ein Sicherheitssignal OFF an den Steuerbaustein 220 liefert. Dieses Sicherheitssignal OFF hat zur Folge, daß die Low-Side-Schalter 120, 121, 122 und 123 und/oder der High-Side-Schalter 115 derart angesteuert werden, daß sie den Stromfluß unterbrechen. Dadurch ist gewährleistet, daß bei einem vorliegenden Off-Signal kein Strom durch den Verbraucher fließt. Bei Vorliegen des Sicherheitssignal OFF wird der Verbraucher derart angesteuert, daß dieser einen sicheren Zustand einnimmt. Insbesondere wird durch das Sicherheitssignal gewährleistet, daß unabhängig von dem Ansteuersignal AD der Verbraucher einen sicheren Zustand einnimmt.

Der Rechner 200 berechnet die Ansteuerdauer AD ausgehend von verschiedenen Betriebskenngrößen, wie beispielsweise der Drehzahl N und dem Fahrerwunsch, die mittels des Sensors 195 erfaßt wird. Die Umsetzung 210 berücksichtigt unter anderem die Reaktions- und Schaltzeiten des Verbrauchers und berechnet ausgehend von der gewünschten Ansteuerdauer den Ansteuerbeginn und das Ansteuerende.

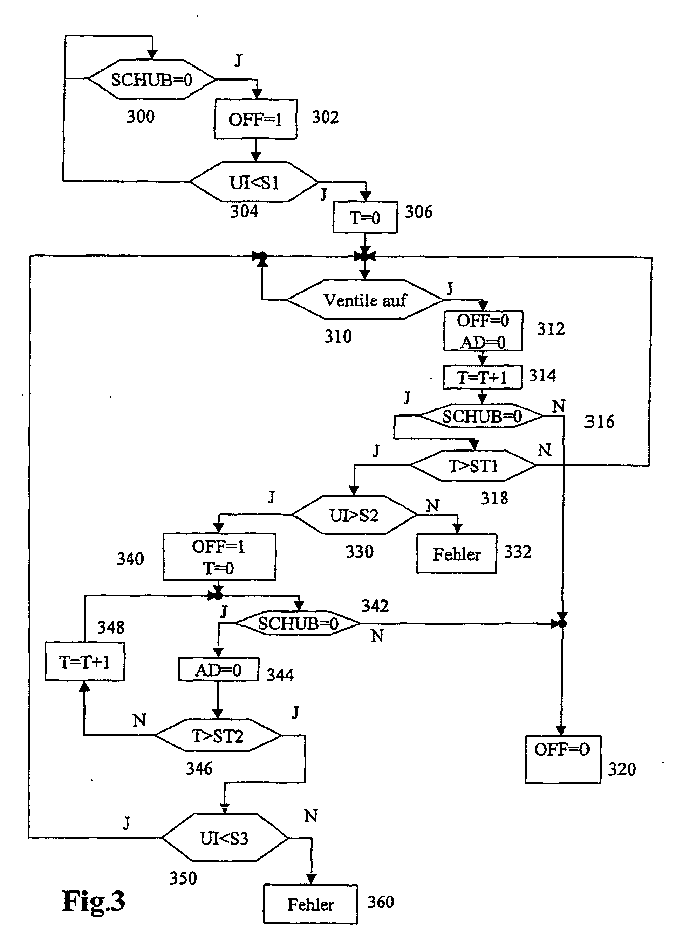

Die erfindungsgemäße Vorgehensweise ist detailliert in Figur 3 als Flußdiagramm dargestellt. Eine erste Abfrage 300 überprüft, ob ein Betriebszustand vorliegt, in dem keine Einspritzung erfolgt. Dies ist beispielsweise im Schubbetrieb der Fall. Ist dies nicht der Fall, so erfolgt erneut die Abfrage 300. Ist dies der Fall, d.h. es liegt ein Betriebszustand vor, bei dem keine Einspritzung erfolgt, so wird in Schritt 302 das Sicherheitssignal OFF aktiviert, d.h. auf 1 gesetzt. Die folgende Abfrage 304 überprüft, ob die Spannung UI, die am Booster-Kondensator 145 anliegt, kleiner als ein Schwellenwert S1 ist. Ist dies nicht der Fall, so erfolgt erneut die Abfrage 300.

Ist die Spannung UI am Booster-Kondensator 145 unter einen ersten Schwellenwert S1 abgefallen, so wird in Schritt 306 ein Zeitzähler T mit 0 gesetzt. Die anschließende Abfrage 310 überprüft, ob ein Betriebszustand vorliegt, bei dem keine Verbrennung möglich ist. D.h. die Abfrage 310 überprüft, ob die Kurbel- bzw. Nockenwelle eine Position einnimmt, in der eine Einspritzung gefahrlos möglich ist, ohne daß die Einspritzung ein Beitrag zum Drehmoment liefert. Ist dies nicht der Fall, so erfolgt erneut die Abfrage 310. Erkennt die Abfrage 310, daß ein Betriebszustand vorliegt, bei dem eine Einspritzung gefahrlos möglich wäre, so erfolgt der Schritt 312. Im Schritt 312 wird das Sicherheitssignal auf 0 gesetzt, d.h. es ist nicht mehr aktiv. Gleichzeitig wird die Ansteuerdauer AD = 0 gesetzt. Anschließend im Schritt 314 wird der Zeitzähler erhöht. Die Abfrage 316 überprüft, ob der Betriebszustand, bei dem keine Einspritzung vorliegt, immer noch vorliegt. Ist dies nicht der Fall, so endet das Programm in Schritt 320. In Schritt 320 wird das Sicherheitssignal auf 0 gesetzt, ein Stromfluß durch die Verbraucher ist nicht möglich, und es wird das normale Steuerprogramm abgearbeitet.

Bei einer vereinfachten Ausgestaltung kann die Abfrage 310 weggelassen werden.

Erkennt die Abfrage 316, daß der Betriebszustand, in dem keine Einspritzungen erfolgen noch vorliegt, überprüft eine anschließende Abfrage 318, ob der Inhalt T des Zeitzählers größer als ein erster Zeitschwellenwert ST1 ist. Ist dies nicht der Fall, so erfolgt erneut die Abfrage 310. Ist dies der Fall, so erfolgt Schritt 330.

Mit der oben dargestellten Vorgehensweise wird sichergestellt, daß der Booster-Kondensator geladen wird, wenn die Spannung UI am Booster-Kondensator unter einen Schwellenwert S1 abfällt. Bei der dargestellten Ausführungsform erfolgt der Ladevorgang nur dann, wenn die Spannung UI kleiner als ein Schwellenwert S1 ist und keine Einspritzung erfolgt. Während des Ladevorganges wird die Ansteuerdauer AD = 0 von dem Rechner 200 an die Umsetzung 210 gegeben, gleichzeitig wird das Sicherheitssignal OFF derart vorgegeben, daß eine Ansteuerung der Verbraucher möglich ist.

Bei einer besonders vorteilhaften Ausgestaltung ist vorgesehen, daß der Ladevorgang nur in solchen Zeitabschnitten erfolgt, in denen eine möglicherweise folgende Einspritzung nicht zu einer Verbrennung von Kraftstoff führt. D.h. der Ladevorgang wird nur in bestimmten Winkelbereichen der Kurbelwelle bzw. der Nockenwelle der Nachladevorgang ermöglicht.

Die Abfrage 330 überprüft, ob die Spannung UI größer als ein zweiter Schwellenwert S2 ist. Ist dies nicht der Fall, so wird in Schritt 332 auf Fehler erkannt. Ist dies der Fall, d.h. die Spannung UI ist größer als der zweite Schwellenwert S2 so folgt Schritt 340.

Die Abfrage 330 überprüft in Verbindung mit der Abfrage 318, ob ein bestimmter Spannungswert S2 innerhalb einer bestimmten Zeit ST1 erreicht wird. Wird die Spannung S2 in der vorgegebenen Zeit ST1 nicht erreicht, so ist von einem Fehler im Bereich der Endstufe 230 und/oder der Steuereinheit 220 auszugehen. Insbesondere ist ein Fehler im Bereich der Steuerung des Ladevorgangs wahrscheinlich. Ein Fehler wird erkannt, wenn die Spannung am Booster-Kondensator nicht auf einen erwarteten Wert ansteigt, wenn das Sicherheitssignal nicht vorliegt OFF=0.

Alternativ zur Abfrage 304 kann auch vorgesehen sein, daß der Ladevorgang zeitgesteuert erfolgt. D.h. nach Ablauf einer bestimmten Wartezeit nach Eintreten des Schubbetriebs bzw..eines Betriebszustandes, in dem keine Einspritzung erfolgt, wird der Ladevorgang ab Schritt 306 initialisiert.

Wird in Schritt 330 erkannt, daß der Ladevorgang ordnungsgemäß erfolgt ist, erfolgt die Prüfung der Abschaltung der Ansteuerung über das Signal OFF. Hierzu wird in Schritt 340 das Sicherheitssignal OFF derart gesetzt, daß keine Einspritzungen erfolgen können. Gleichzeitig wird der Zeitzähler T auf 0 gesetzt. Die anschließende Abfrage 342 überprüft, ob der Schubbetrieb noch vorliegt. Ist dies nicht der Fall, so endet das Programm ebenfalls in Schritt 320. Erkennt die Abfrage 342, daß der Schubbetrieb weiterhin vorliegt, wird im Schritt 344 die Ansteuerdauer auf 0 gesetzt. Die sich anschließende Abfrage 346 überprüft, ob der Zeitzähler größer als eine zweite Zeitschwelle ST2 ist. Ist dies nicht der Fall, so wird in Schritt 348 der Zeitzähler erhöht und mit der Abfrage 342 fortgesetzt. Erkennt die Abfrage 346, daß die Zeit T größer als der Zeitschwellenwert ST2 ist, so wird in Schritt 350 überprüft, ob die Spannung UI kleiner als ein dritter Schwellenwert S3 ist. Ist dies nicht der Fall, so wird in Schritt 360 auf Fehler erkannt. Ist dies der Fall, wird mit Schritt 310 fortgefahren.

Dies bedeutet, wurde ein ordnungsgemäßes Laden des Booster-Kondensators erkannt, wird der Ladevorgang fortgesetzt, wobei das Sicherheitssignal aktiv ist. Wird das Sicherheitssignal OFF ordnungsgemäß übermittelt und verarbeitet, so wird durch dieses Sicherheitssignal der Ladevorgang unterbunden. Bei ordnungsgemäßer Funktion des Sicherheitssignals muß innerhalb einer bestimmten Zeit ST2 die Spannung UI am Booster-Kondensators unterhalb eines Schwellenwertes S3 abgefallen sein. Ist dies der Fall, so kann von einer ordnungsgemäßen Funktionsweise des Sicherheitssignals ausgegangen werden. In diesem Fall wird der Booster-Kondensator geladen, um bei der nächsten Einspritzung einen ordnungsgemäßen Betrieb des Verbrauchers gewährleisten zu können.

Fällt die Spannung während Vorliegen des Sicherheitssignals jedoch nicht unter den Schwellenwert S3 ab, so wurde der Ladevorgang durchgeführt, obwohl das Sicherheitssignal vorliegt, dies bedeutet, das Sicherheitssignal OFF hat nicht zu einer Unterbrechung des Stromschluß geführt. Dies wird in Schritt 360 als Fehler erkannt.

Erfindungsgemäß wird die Wirkungsweise des Sicherheitssignals ausgehend vom Zustand des Booster-Kondensators, der auch als Speichermittel bezeichnet werden kann, geprüft. Insbesondere wird auf Fehler erkannt, wenn bei Vorliegen des Sicherheitssignals die Spannung am Booster-Kondensator von einem erwarteten Wert abweicht. D.h. ein Fehler wird erkannt, wenn die Spannung größer als der Schwellenwert S3 ist. D.h. ein Fehler wird erkannt, wenn beim Nachladen und bei vorliegendem Sicherheitssignal der Zustand des Speichermittels sich nicht wie erwartet ändert. Insbesondere wird ein Fehler im Bereich des Sicherheitssignal erkannt, wenn bei vorliegendem Sicherheitssignal beim Nachladen die Spannung nicht abfällt.

Durch die erfindungsgemäße Vorgehensweise wird sichergestellt, daß auch bei Fehlfunktionen im Abschaltpfad der Schubbetrieb, d.h. der Zustand keine Einspritzung sicher gewährleistet ist. Gleichzeitig kann der Abschaltpfad im Schubbetrieb sehr einfach auf seine Wirkungsweise getestet werden.

## Patentansprüche

1. Verfahren zur Ansteuerung wenigstens eines Verbrauchers zur Steuerung der Einspritzung von Kraftstoff in eine Brennkraftmaschine, bei dem mit wenigstens einem Schaltmittel der Stromfluss durch den Verbraucher abhängig von einem Steuersignal (AD) steuerbar ist, wobei bei Vorliegen wenigstens eines Sicherheitssignals (OFF) der Verbraucher derart angesteuert wird, dass kein Strom durch den Verbraucher fließt, **dadurch gekennzeichnet, dass** die Wirkungsweise des Sicherheitssignals ausgehend von einem Zustand eines Kondensators (145) geprüft wird.

2. Verfahren nach einem der vorhergehenden Ansprüche, **dadurch gekennzeichnet, dass** ein Fehler erkannt wird, wenn beim Nachladen des Kondensators (145) der Zustand des Kondensators (145) sich nicht wie erwartet ändert.

3. Verfahren nach einem der vorhergehenden Ansprüche, **dadurch gekennzeichnet, dass** ein erstes Fehler erkannt wird, wenn bei Vorliegen des Sicherheitssignals die Spannung am Kondensator (145) von einem erwarteten Wert (S3) abweicht.

4. Verfahren nach Anspruch 3, **dadurch gekennzeichnet, dass** der erste Fehler, insbesondere im Bereich des Sicherheitssignal, erkannt wird, wenn bei vorliegendem Sicherheitssignal beim Nachladen des Kondensators (145) die Spannung am Kondensator (145) nicht abfällt.

5. Verfahren nach einem der vorhergehenden Ansprüche, **dadurch gekennzeichnet, dass** ein zweiter Fehler erkannt wird, wenn bei einem nicht vorliegenden Sicherheitssignal (OFF) beim Nachladen des Kondensators (145) die Spannung am Kondensator (145) nicht ansteigt.

6. Vorrichtung zur Ansteuerung wenigstens eines Verbrauchers zur Steuerung der Einspritzung von Kraftstoff in eine Brennkraftmaschine, bei der mit wenigstens einem Schaltmittel der Stromfluss durch den Verbraucher abhängig von einem Steuersignal (AD) steuerbar ist, mit Mitteln, die bei Vorliegen wenigstens eines Sicherheitssignals (OFF) den Verbraucher derart ansteuern, dass kein Strom durch den Verbraucher fließt, **dadurch gekennzeichnet, dass** Mittel vorgesehen sind, die die Wirkungsweise des Sicherheitssignals ausgehend von einem Zustand eines Kondensators (145) prüfen.

## Revendications

1. Procédé de commande d'au moins un consommateur pour la commande de l'injection de carburant dans un moteur à combustion interne, dans lequel au moins un moyen de commutation permet de commander le flux de courant à travers le consommateur en fonction d'un signal de commande (AD), et en présence d'au moins un signal de sécurité (OFF) le consommateur est commandé de telle sorte qu'aucun courant ne passe à travers le consommateur,
**caractérisé en ce que**
le mode d'action du signal de sécurité est contrôlé à partir de l'état d'un condensateur (145).

2. Procédé selon l'une des revendications précédentes,
**caractérisé en ce qu'**
une erreur est détectée lorsque, lors de la recharge du condensateur (145), l'état du condensateur (145) ne se modifie pas comme prévu.

3. Procédé selon l'une des revendications précédentes,
**caractérisé en ce qu'**
une première erreur est détectée lorsque, en présence du signal de sécurité, la tension aux bornes du condensateur (145) diffère d'une valeur prévue (S3).

4. Procédé selon la revendication 3,
**caractérisé en ce que**
la première erreur, en particulier dans la zone du signal de sécurité, est détectée lorsque, en présence du signal de sécurité, lors de la recharge du condensateur (145), la tension aux bornes du condensateur (145) ne baisse pas.

5. Procédé selon l'une des revendications précédentes,
**caractérisé en ce qu'**
une deuxième erreur est détectée lorsque, en cas d'absence du signal de sécurité (OFF), lors de la recharge du condensateur (145), la tension aux bornes du condensateur (145) n'augmente pas.

6. Dispositif de commande d'au moins un consommateur pour la commande de l'injection de carburant dans un moteur à combustion interne, dans lequel au moins un moyen de commutation permet de commander le flux de courant à travers le consommateur en fonction d'un signal de commande (AD), comprenant des moyens qui, en présence d'au moins un signal de sécurité (OFF), commandent le consommateur de telle sorte qu'aucun courant ne passe à travers le consommateur,
**caractérisé en ce que**
des moyens sont prévus pour contrôler le mode d'action du signal de sécurité à partir de l'état d'un condensateur (145).

## Claims

1. Method for driving at least one load for controlling the injection of fuel into an internal combustion engine, in which method the flow of current through the load can be controlled as a function of a control signal (AD) using at least one switching means, the load being driven in such a way that no current flows through the load when at least one safety signal (OFF) is present, **characterized in that** the action of the safety signal is checked on the basis of a state of a capacitor (145).

2. Method according to Claim 1, **characterized in that** a fault is identified when the state of the capacitor (145) does not change in the expected manner during recharging of the capacitor (145).

3. Method according to either of the preceding claims, **characterized in that** a first fault is identified when the voltage across the capacitor (145) deviates from an expected value (S3) when the safety signal is present.

4. Method according to Claim 3, **characterized in that** the first fault, in particular in the region of the safety signal, is identified when the voltage across the capacitor (145) does not fall when the safety signal is present during recharging of the capacitor (145).

5. Method according to one of the preceding claims, **characterized in that** a second fault is idnetified when the voltage across the capacitor (145) does not rise when a safety signal (OFF) is not present during recharging of the capacitor (145).

6. Apparatus for driving at least one load for controlling the injection of fuel into an internal combustion engine, in which apparatus the flow of current through the load can be controlled as a function of a control signal (AD) using at least one switching means, having means which drive the load in such a way that no current flows through the load when at least one safety signal (OFF) is present, **characterized in that** means which check the action of the safety signal on the basis of a state of a capacitor (145) are provided.
